**Europäisches Patentamt**

**European Patent Office**

**Office européen des brevets**

(19)

(11) Veröffentlichungsnummer : **0 283 432 B1**

# EUROPÄISCHE PATENTSCHRIFT

(12)

(45) Veröffentlichungstag der Patentschrift :
25.09.91 Patentblatt 91/39

(51) Int. Cl.$^5$ : **H04L 9/00**

(21) Anmeldenummer : 88810084.9

(22) Anmeldetag : 11.02.88

(54) **Verfahren und Vorrichtung zum Schutz der Geheimelemente in einem Netz von Chiffriergeräten mit offener Schlüssel-Verwaltung.**

(30) Priorität : 17.02.87 CH 578/87

(43) Veröffentlichungstag der Anmeldung :
21.09.88 Patentblatt 88/38

(45) Bekanntmachung des Hinweises auf die
Patenterteilung :
25.09.91 Patentblatt 91/39

(84) Benannte Vertragsstaaten :
AT BE CH DE FR GB IT LI NL SE

(56) Entgegenhaltungen :
EP-A- 0 055 986

(56) Entgegenhaltungen :
EP-A- 0 148 960
C.H. MEYER et al.: "Cryptography: a new dimension in computer data security", J. Wiley & Sons, New York, US, Seiten 562-564

(73) Patentinhaber : GRETAG Aktiengesellschaft
Althardstrasse 70
CH-8105 Regensdorf (CH)

(72) Erfinder : Schöbl, Paul Jakob, Dr.
Oberwiesenstrasse 739
CH-8050 Zürich (CH)

(74) Vertreter : Kleewein, Walter, Dr. et al
Patentabteilung CIBA-GEIGY AG Postfach
CH-4002 Basel (CH)

## Beschreibung

Die heute weit verbreiteten offenen Kommunikationsnetze verlangen nach einem umfassenden kryptologischen Schutz. Dabei stellen sich Probleme im Zusammenhang mit der Schlüsselverwaltung, wie sie in den konventionellen Punkt-zu-Punkt Verbindungen kaum auftraten :

— Die Netze sind dynamisch, d.h. die Menge der Benützer variiert ständig : Alte Teilnehmer scheiden aus und neue kommen dazu. Weiter ist auch die Menge der benötigten (bzw. erlaubten) Verbindungen variabel.

— Die Offenheit der Netze verlangt spezielle Massnahmen zur Identifikation der Benützer, da jedermann die Möglichkeit zum Zugriff auf das Netz hat.

In den letzten Jahren wurden verschiedene Möglichkeiten des Key Management in einer solchen Situation vorgeschlagen. Es sind Methoden bekannt, welche auf konventionellen (symmetrischen) Block-Chiffrier-Algorithmen beruhen, es wurden aber auch Public Key-Verfahren verwendet. In den nachstehenden Ausführungen ist hauptsächlich die Situation der konventionellen Algorithmen und zwar anhand einer bestimmten Realisierungsform beschrieben ; die meisten Erfindungsideen können aber sinngemäss auch auf die Public Key-Situation ausgedehnt werden.

Die Grundidee der konventionellen Key Management-Verfahren beruht auf dem sogenannten 'Master Key'-Prinzip. Dies bedeutet, dass eine gewisse Hierarchie von Schlüsseln festgelegt wird, sodass bestimmte Schlüssel (der tiefsten Hierarchie-Stufe) zur eigentlichen Datenverschlüsselung verwendet werden. Die Schlüssel höherer Stufen (Master Key) werden zur Verschlüsselung von 'Key Management-Meldungen' benützt. Solche Meldungen dienen zur Uebertragung von neuen Schlüsseln tieferer Stufe.

Ein entsprechendes Verfahren wurde von ANSI standardisiert (ANSI X9.17). Es existiert auch ein Standard-Vorschlag von ISO (ISO DP 8732) für ein praktisch identisches System. Hier wird zwischen 'Data Encrypting Keys' (KD's ; Datenchiffrierschlüsseln) und 'Key Encrypting Keys' (KK's ; Schlüsselchiffrierschlüsseln) unterschieden. In einer typischen Anwendung wird zu Beginn jeder neuen Session (Datenübertragung) ein zufälliger KD mit dem bilateralen KK verschlüsselt übertragen und anschliessend für die Chiffrierung verwendet.

Als Chiffrieralgorithmus wird in den Standards DES ("Data Encryption Standard" gemäss FIPS Pub. 46 National Bureau of Standards, Washington DC, Jan. 77) vorschlagen. Die Methoden arbeiten aber auch mit beliebigen anderen Block-Chiffrierern in gleicher Weise.

Als weitere Sicherheit postuliert der Standard die Verwendung von 'Counters'. Dabei handelt es sich um Zähler, welche einerseits die Anzahl der Anwendungen eines KK's zählen und anderseits diesen KK vor seiner Verwendung verändern ('Key Offsetting'). Die Geräte sollen so realisiert werden, dass ein Dekrementieren dieses Counters unmöglich ist. Es werden ferner Verfahren angegeben, welche eine Synchronisation der Counters von zwei Systemteilnehmern erlauben. Dies bewirkt, dass alte, früher abgespeicherte Meldungen mit gestohlenen Geräten nicht dechiffriert werden können, da dort ein tieferer Counter-Wert verwendet wurde und ein Dekrementieren von Counters nicht möglich ist.

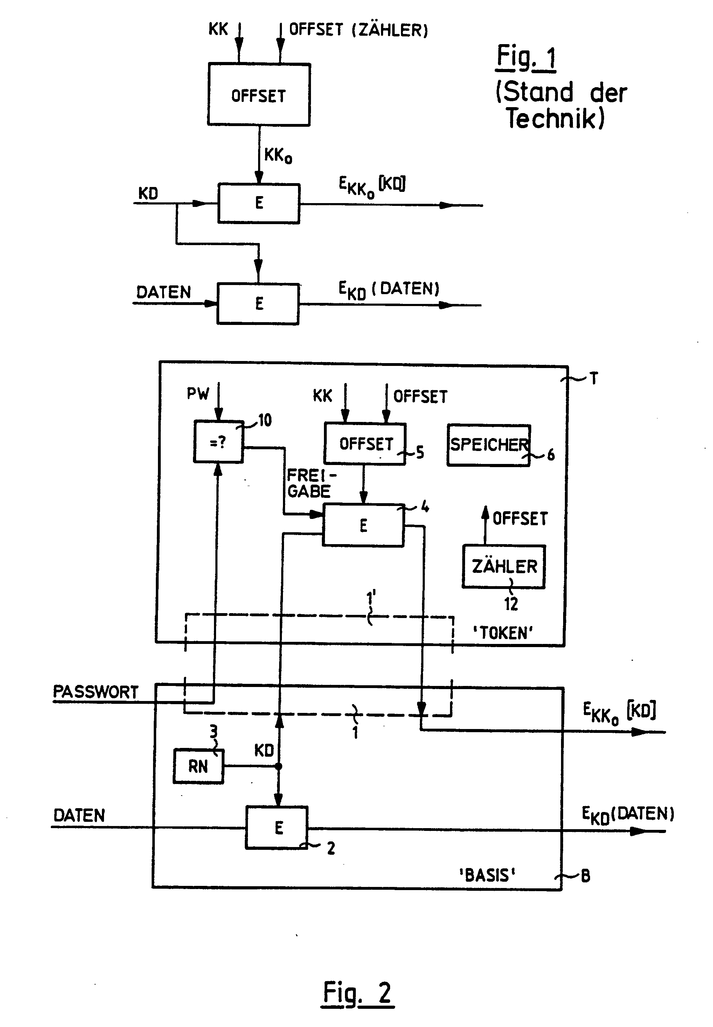

Fig. 1 der Zeichnung zeigt schematisch die notwendigen Operationen beim Aufbau einer Session gemäss ANSI X9.17. (Mit E bezeichnete Blöcke symbolisieren eine Chiffrieroperation.) Zuerst wird der (z.B. mittels eines Zufallsgenerators) zufällig erzeugte Datenschlüssel KD chiffriert unter Verwendung des Schlüsselverschlüsselungs-Schlüssels KK übertragen. Dazu wird KK erst unter Verwendung des dazugehörenden Counters verändert (offsetted). Das Resultat dieser Operation ist mit KKo (offsetted KK) bezeichnet, der chiffrierte Datenschlüssel mit $E_{KKo}$ [KD]. Anschliessend werden die unter KD chiffrierten Daten gesendet, wobei das Chiffrat mit $E_{KD}$ [Daten] bezeichnet ist. Der Empfänger muss demzufolge zuerst durch Inversion der ersten Operationen KD bestimmen und kann anschliessend die Daten dechiffrieren.

Bei der Realisierung eines kryptologischen Systems stellt sich als eines der Hauptprobleme die Frage, welche Elemente vor welcher Art von Zugriffen geschützt werden müssen. Sollen kostengünstige und dennoch sichere Geräte hergestellt werden, so muss einerseits der zu schützende Bereich möglichst klein gehalten werden. Anderseits müssen die Konzepte so gewählt werden, dass relativ einfache Schutzmassnahmen genügen. Dementsprechend ist die Aufgabe der vorliegenden Erfindung die Realisierung eines Key Management in der Art der oben erwähnten Standards auf eine solche Art und Weise, dass kostengünstige Schutzmassnahmen für die sensitiven Elemente möglich sind. Zusätzlich soll die Erfindung vorzugsweise noch eine einfache Identifizierung der Benützer bzw. eine Zutrittskontrolle ermöglichen und insbesondere noch unmittelbar die Realisierung einer 'Key Gun' zur Verteilung der KKs der höchsten Sicherheits- (bzw. Hierarchie-) Stufen erlauben.

Diese Aufgabe wird durch die in den unabhängigen Ansprüchen definierte Erfindung gelöst. Bevorzugte Ausführungsformen und Weiterbildungen der Erfindung sind in den abhängigen Ansprüchen beschrieben.

Die Erfindung basiert auf der Verwendung eines intelligenten Sicherheitsmoduls ("Token's") mit den folgenden Eigenschaften :

— Seine Abmessungen sind klein genug, dass es bequem von einer Person getragen werden kann. Zum Beispiel kann das Token als sogenannte 'Smart Card' (mit elektronischer Intelligenz ausgestattetes Modul im Kreditkartenformat) ausgebildet sein.

— Es kann Informationen speichern und über längere Zeit zur Verfügung halten.

— Es kann Chiffrieroperationen durchführen.

— Seine Funktion (z.B. sein Programm) kann nicht von aussen beeinflusst werden.

— Es ist nicht einfach möglich, die auf dem Token gespeicherten Informationen auszulesen.

— Das Token kann mit einem Passwort 'verschlossen' werden in dem Sinne, das zu einer Aktivierung ein Passwort geliefert werden muss.

Durch dieses Token wird nicht nur die der Erfindung zugrundeliegende Aufgabe gelöst, sondern es werden noch eine Reihe von weiteren, aus dem folgenden hervorgehenden Vorteilen erreicht.

Entfernt ähnliche Systeme sind z.B. in C.H. Meyer et al : "Cryptography : a new dimension in data security", Seiten 652-654, John Wiley & Sons, New York, USA order in US-PS 4498000 oder in EP-A-148960 beschrieben. Ein wichtiger Unterschied der Erfindung zum System von C.H. Meyer et al. besteht z.B. darin, dass bei Meyer et al das Security Module stationär und fest mit dem Terminal (oder Host) verbunden ist, wogegen das Security Module gemäss der Erfindung mobil, vom Grundgerät trennbar ist. Bei der US-PS 4498000 handelt es sich um ein System, welches im wesentlichen Authentifikation für Rechner-Zugriff ("Bankomat") ermöglicht. Hier geht es nicht um die Chiffrierung von Daten. Beim System der EP-A148960 wird ein "Validity Module" im Zusammenhang mit Datenchiffrierung verwendet. Das Key Management ist hier aber sehr verschieden von dem gemäss der Erfindung. Neue Session-Keys werden aus alten (auf dem Module) berechnet. Es besteht keine Schlüsselhierarchie gemäss der Erfindung.

Im folgenden wird die Erfindung anhand von in der Zeichnung dargestellten Ausführungsbeispielen näher erläutert. Es zeigen :

Fig. 1          ein Blockschema des Funktionsablaufs gemäss ANSI-Norm X9.17 (Stand der Technik),

Fig. 2 und 3    je blockschematisch ein erfindungsgemässes Chiffriergerät, einmal als Sender und einmal als Empfänger,

Fig. 4          ein Blockschema eines erfindungsgemässen Identifikationssystems,

Fig. 5          eine schematische Ansicht eines erfindungsgemässen Sicherheitsmoduls (Token's), und

Fig. 6          ein Blockschema des elektrischen Aufbaus eines solchen Token's.

Das in den Figuren dargestellte Chiffriergerät ist erfindungsgemäss zweiteilig aufgebaut. Es besteht aus einem als 'Basis' bezeichneten Grundteil B und einem von diesem körperlich und elektrisch trennbaren, als 'Token' bezeichneten Sicherheitsmodul T. Zur Verbindung untereinander sind die beiden Teile B und T mit komplementären Schnittstellen 1 und 1' (z.B. in Form von galvanischen Kontakten) versehen.

Als Ganzes gesehen entspricht das dargestellte Chiffriergerät voll und ganz herkömmlichen, für den Betrieb nach der genannten ANSI-Norm X9.17 ausgelegten Chiffriergeräten, die Erläuterung kann sich daher auf die für das Verständnis der eigentlichen Erfindung notwendigen Teile beschränken.

Der Grundteil B umfasst im wesentlichen eine Chiffrier/Dechiffrierstufe 2 und einen Zufallsgenerator 3 zur Erzeugung der Datenchiffrierschlüssel KD. Im Token T sind im wesentlichen ebenfalls eine Chiffrier/Dechiffrierstufe 4, eine Offset-Stufe 5, ein Zähler (Counter) 12 für den Offset-Wert und ein Speicher 6 für (gegebenenfalls mehrere) Schlüsselchiffrierschlüssel KK vorhanden. Der Zähler 12 ist vorzugsweise softwaremässig implementiert.

Der Grundteil B entspricht im weiteren herkömmlichen Geräten dieser Art und bedarf daher keiner näheren Erläuterung.

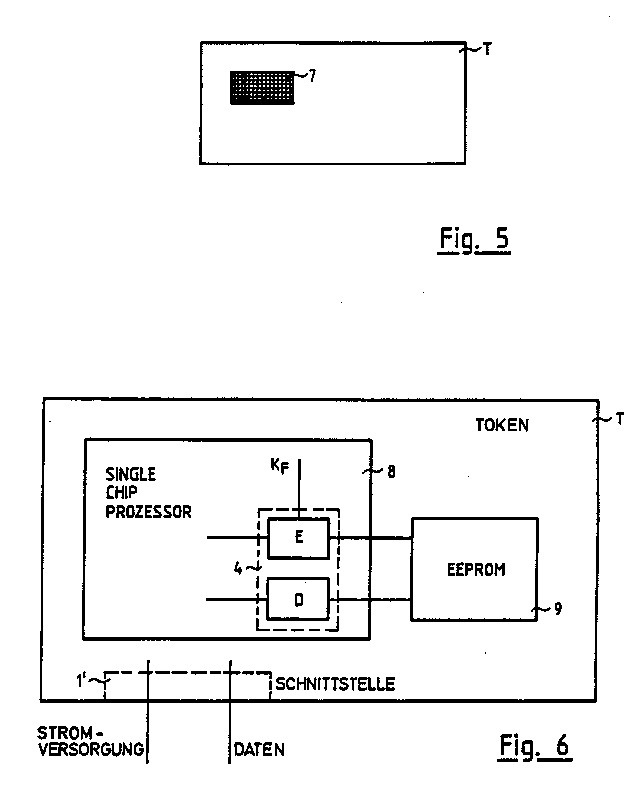

Das Token hat körperlich vorzugsweise eine kreditkartenähnliche Bauform. In Fig. 5 ist ein Beispiel dafür schematisch dargestellt, wobei der die Elektronik enthaltende Bereich mit 7 bezeichnet ist. Die elektrische Verbindung zum Grundteil B kann z.B. wie bei den bekannten 'Smart Cards' über galvanische Kontakte realisiert sein.

Die zur Implementation der benötigten Funktionen erforderliche Elektronik kann gemäss Fig. 6 vorzugsweise durch einen Single-Chip Processor (Prozessor in Form eines einzigen integrierten Schaltkreises) 8 und einen Speicher 9 in Form eines EEPROMS oder batteriegepufferten RAMs realisiert sein. Der Speicher kann sich dabei unter Umständen auch direkt auf dem Prozessor-Chip selbst befinden.

Die "Intelligenz" des Tokens T ist somit durch den Single-Chip Processor (in Verbindung mit dem Speicher) realisiert. Damit das Auslesen von gespeicherter Information (für Unbefugte) nicht mit einfachen Mitteln möglich ist, muss der Prozessor so programmiert werden können, dass er einerseits keinen externen Programmcode (Befehl) ausführen kann, und dass anderseits der Inhalt seines internen Speichers (Programm und Daten) nicht durch Anlegen von elektrischen Signalen von aussen gelesen werden können. Wenn der nichtflüchtige Speicher 9, der relativ gross sein muss und anderseits (aus Sicherheitsgründen) elektrisch löschbar sein soll, nicht auf dem gleichen Chip wie der Prozessor 8 enthalten ist, so muss sein Inhalt durch einen kryptologischen Algorithmus vor Auslesen und Aenderung geschützt werden. Dazu kann ein spezieller File-Schlüssel $K_F$ benutzt werden, der im (nicht auslesbaren) Speicher des Single-Chip Prozessors 8 abgelegt wird. In dieser Anordnung verlangt unbefugtes Lesen der Information auf dem Token ein Lesen von Information auf dem Prozessor-Chip (mindestens $K_F$). Ist der entsprechende Chip-eigene Speicher in EPROM- oder in EEPROM-Technik realisiert, so verlangt dies eine relativ aufwendige Technologie und bietet somit einen für viele Fälle genügenden Schutz (sogenannte 'Tamper Protection').

Die für die Chiffrierung der Datenchiffrierschlüssel KD zu verwendenden Schlüsselchiffrierschlüssel KK werden in einem speziellen Gerät oder eventuell im Chiffriergerät(-Basisteil) selbst erzeugt und zusammen mit ihrem jeweils zugehörigen Counter (Zähler selbst und Inhalt) auf dem Token unter Berücksichtung der vorstehend beschriebenen Sicherheitsgesichtspunkte abgespeichert.

Soll nun eine Verbindung zwischen zwei Chiffriergeräten aufgebaut werden, so muss das Token mit den für die Verbindung benötigten KK's in das verwendete Chiffriergerät(-Basisteil) eingesetzt werden. Für jede Session muss nun ein zufälliger Datenchiffrierschlüssel KD erzeugt und anschliessend unter KK (mit entsprechendem Offset) verschlüsselt übertragen werden

$$(E_{KK_0} [KD]).$$

Im empfangenden Chiffriergerät wird aus dem Chiffrat durch entsprechende Umkehrung der Operationen der Datenchiffrierschlüssel KD wieder hergestellt. Die Ver- und Entschlüsselung des Datenchiffrierschlüssels KD erfolgt dabei im Token und nicht im Basisteil. Die beteiligten Chiffriergeräte (d.h. die Basisteile, also die Geräte ohne Token) haben somit nur Zugriff auf die Datenchiffrierschlüssel KD, nicht aber auf die beteiligten schlüsselchiffrierschlüssel KK ! Die notwendigen Operationen am Counter, d.h. z.B. das Offsetting, werden automatisch ebenfalls im Token durchgeführt.

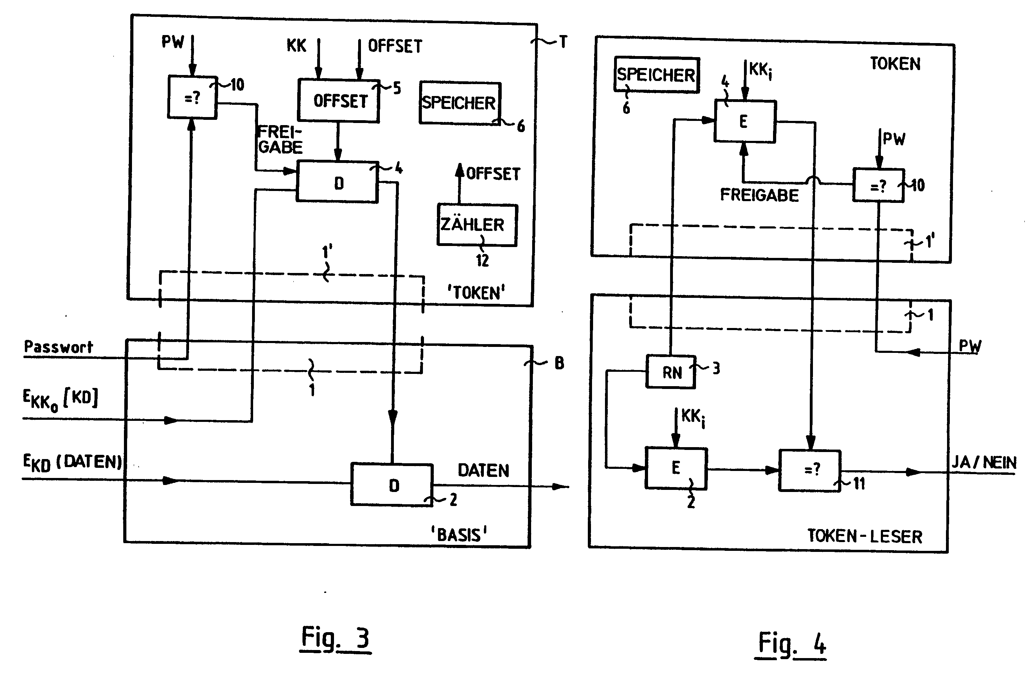

Wie in Fig. 2 und 3 schematisch angedeutet, kann das Token auch mit einem Passwort-System ausgestattet sein, welches einen Zugriff auf die Schlüssel KK nur gestattet, wenn vom Benutzer das richtige Passwort (via Basisteil) eingegeben worden ist. Ein Vergleicher 10 untersucht das eingegebene Passwort mit dem im Token gespeicherten Passwort PW und gibt in Abhängigkeit vom Vergleichsergebnis z.B. die Chiffrier/Dechiffrierstufe 4 frei bzw. sperrt sie. Selbstverständlich kann dieses Passwortsystem beliebig ausgeklügelt konzipiert sein.

Das vorstehend beschriebene System zur Kommunikationschiffrierung bietet (mit dem Passwortsystem) eine implizite Benutzeridentifikation, indem nur derjenige Besitzer des Tokens, der zusätzlich auch noch das richtige und notwendige Passwort kennt, Zugriff auf die zum Verbindungsaufbau benötigten Schlüssel KK hat. Es ist jedoch auch möglich, das erfindungsgemässe Prinzip für eine explizite Benutzeridentifikation zu benutzen. Ein Beispiel dafür ist in Fig. 4 dargestellt.

Das dargestellte Gerät besteht aus einem hier als 'Token-Leser' bezeichneten Basisteil B' und dem schon bekannten Token T. Das Token enthält wiederum eine Chiffrierstufe 4, ein Passwortsystem 10 und einen Speicher 6 für Schlüssel und Passwort (oder Passwörter). Der für die Identifikation verwendete Schlüssel ist hier allgemein mit $KK_i$ bezeichnet.

Im Token-Leser sind ein Zufallsgenerator 3, eine Chiffrierstufe 2, ein Schlüsselspeicher 6' und ein Vergleicher 11 vorhanden.

Das System arbeitet nach dem 'Challenged Response-Prinzip' : Nach der Aktivierung des Tokens durch Eingabe des korrekten Passworts erzeugt der Zufallsgenerator 3 ein Zufallszahl RN, welche in der Chiffrierstufe 2 unter dem im Speicher 6' enthaltenen Identifikationsschlüssel $KK_i$ chiffriert wird. Gleichzeitig wird die Zufallszahl zum Token übertragen und dort ebenfalls unter dem dort abgespeicherten Schlüssel $KK_i$ chiffriert. Das Chiffrat

$$E_{KK_i} [RN]$$

gelangt zurück in den Token-Leser und wird dort vom Vergleicher 11 mit dem in Token-Leser erzeugten Chiffrat verglichen. Das Vergleichsergebnis wird dann entsprechend signalisiert.

Der Token-Leser B' muss nicht unbedingt ein selbständiges Gerät, sondern kann selbstverständlich auch in ein Chiffrier-System integriert bzw. in einem solchen realisiert sein. Dazu müsste z.B. lediglich der Basis-Teil B des Chiffriersystems der Fig. 2 und 3 um den Vergleicher 11 und gegebenenfalls Schlüsselspeicher 6' erweitert werden.

Das erfindungsgemässe Sicherheits-Modul (Token) kann ferner auch unmittelbar zur Schlüsselverteilung

EP 0 283 432 B1

im Sinne einer sogenannten 'Key Gun' (Schlüsselverteilgerät) verwendet werden : Zu verteilende Schlüssel werden im Speicher des Tokens abgelegt und nach Einsetzen des Tokens in das Ziel-Chiffriergerät (nach Eingabe des Passworts) in dieses und in das zugehörige zweite (bzw. gegebenenfalls weitere Token übertragen.

Durch das vorstehend erläuterte erfindungsgemässe Prinzip der Aufteilung der Geräte in Basisteil und Token werden eine Reihe von Schutzfunktionen erreicht. Die Speicherung der Schlüsselchiffrierschlüssel KK (d.h. der wirklich sensitiven Geheimelemente) im Token und die leicht handhabbare Form des Tokens erlauben ein Entfernen aller sensitiven Elemente nach der Benützung eines Gerätes. Dies bedeutet, dass Chiffriergeräte im inaktiven Zustand keine Geheimelemente enthalten. Sie müssen also nicht vor unbefugtem Oeffnen geschützt werden.

Kann die Funktion eines Chiffriergerätes beeinflusst werden (z.B. durch Modifikation der Hardware oder Software), so kann höchstens ein Zugriff zu einem momentan aktiven Daten-Schlüssel (KD) gemacht werden. Es ist nicht möglich, die verwendeten KK zu erfahren, ohne das Token zu analysieren.

Der Schutz des Tokens geschieht primär dadurch, dass es wegen seiner kleinen Bauform leicht sicher aufbewahrt werden kann (z.B. auf der Person des Benützers).

Der Schutz der Geheimelemente auf dem Token geschieht in einer ersten Stufe durch ein Passwort. Ein Zugriff ohne Kenntnis des Passwortes würde technologisch schwierige Manipulationen an den integrierten Schaltelementen verlangen.

**Patentansprüche**

1. Verfahren zum Schützen der Geheimelemente in einem Netz von Chiffriergeräten mit offener Schlüssel-Verwaltung und Schlüsseln unterschiedlicher Hierarchie-Stufen, wobei Schlüssel (KD) niedrigerer Hierarchie-Stufen unter Schlüsseln (KK) höherer Hierarchie-Stufen verschlüsselt übertragen werden, dadurch gekennzeichnet, dass die Verschlüsselung der Schlüssel (KD) niedrigerer Hierarchie-Stufen in einem vom jeweiligen Chiffriergerät (B) trennbaren Sicherheitsmodul (T) erfolgt, in dem auch die dazu erforderlichen Schlüssel (KK) höherer Hierarchie-Stufen vor unbefugtem Auslesen gesichert gespeichert sind.

2. Verfahren nach Anspruch 1, dadurch gekennzeichnet, dass die Chiffrierung unter den Schlüsseln (KK) höherer Hierarchie-Stufen im Sicherheitsmodul (T) durch ein Passwortsystem (10) gesichert wird.

3. Chiffriervorrichtung zur Verwendung in einem Netz mit offener Schlüssel-Verwaltung und Schlüsseln unterschiedlicher Hierarchie-Stufen, wobei Schlüssel (KD) niedrigerer Hierarchie-Stufen unter Schlüsseln (KK) höherer Hierarchie-Stufen verschlüsselt übertragen werden, dadurch gekennzeichnet, dass sie ein vom übrigen Gerät (B) körperlich und elektrisch trennbares Sicherheits-Modul (T) aufweist, in dem die zur Chiffrierung der Schlüssel (KD) niedrigerer Hierarchie-Stufen erforderlichen Funktionsstufen (4, 5, 6) und Schlüssel (KK, Offset) untergebracht bzw. vor unbefugtem Auslesen gesichert gespeichert sind, sodass das übrige Gerät (B) keinerlei Geheimelemente enthält.

4. Vorrichtung nach Anspruch 3, dadurch gekennzeichnet, dass das Sicherheits-Modul (T) ein es schützendes Passwort-System (10) aufweist.

5. Vorrichtung nach Anspruch 3 oder 4, dadurch gekennzeichnet, dass das Sicherheits-Modul (T) eine kreditkartenähnliche Bauform aufweist.

6. Vorrichtung nach einem der Ansprüche 3-5, dadurch gekennzeichnet, dass im Sicherheits-Modul (T) gespeicherte Informationen wenigstens teilweise in kryptologisch gesicherter Form gespeichert sind.

7. Vorrichtung nach einem der Ansprüche 3-6, dadurch gekennzeichnet, dass im Sicherheits-Modul (T) ein Zähler (12) zur Erzeugung eines Offset-Werts sowie eine Modifikationsstufe (5) zur Schlüsselmodifikation aufgrund dieses Offset-Werts vorgesehen sind.

8. Sicherheits-Modul, für eine Chiffriervorrichtung zur Verwendung in einem Netz mit offener Schlüssel-Verwaltung und Schlüsseln unterschiedlicher Hierarchie-Stufen, dadurch gekennzeichnet, dass es als mit einem Chiffriergerät körperlich und elektrisch verbindbare, tragbare selbständige Einheit ausgebildet ist, welche die zur Chiffrierung/Dechiffrierung einer ihr zugeführten Information sowie die zur Speicherung der dabei verwendeten Chiffrier/Dechiffrierschlüssel erforderlichen Funktionsstufen bzw. Speicher enthält wobei die Chiffrier-/Dechiffrierschlüssel zusätzlich vor unbefugtem Auslesen geschützt sind.

9. Sicherheits-Modul nach Anspruch 8, dadurch gekennzeichnet, dass es zusätzlich gemäss einem der Ansprüche 4-7 ausgebildet ist.

10. Verwendung der Sicherheits-Moduls nach Anspruch 8 oder 9 zur Benützer-Identifikation.

11. Verwendung des Sicherheits-Moduls nach Anspruch 8 oder 9 zur Speicherung und Abgabe (Verteilung) von Chiffrierschlüsseln an ein Chiffriergerät und gegebenenfalls ein anderes Sicherheits-Modul.

5

## Claims

1. A process for the protection of secret elements in a network of encryption devices with open key management and keys of different hierarchical levels, in which keys (KD) of lower hierarchical levels are transmitted in an encrypted form under keys (KK) of higher hierarchical levels, wherein the encryption of the keys (KD) of the lower hierarchical levels is effected in a security module (T) separable from the particular encryption device (B), and in which the requisite keys (KK) of the higher hierarchical levels are also stored in such a manner that they are secured against unauthorised reading.

2. The process according to claim 1, wherein the encryption under the keys (KK) of higher hierarchical levels in the security module (T) is secured by a password system (10).

3. An encryption device for use in a network with open key management and with keys of different hierarchical levels, in which keys (KD) of lower hierarchical levels are transmitted in an encrypted form under keys (KK) of higher hierarchical levels, wherein a security module (T) is provided that is structurally and electrically separable from the remainder of the device (B) and in which the functional stages (4, 5, 6) and the keys (KK, offset) required for the encryption of the keys (KD) of the lower hierarchical levels are accommodated and stored in such a manner that they are secured against unauthorised reading, so that the remainder of the device (B) contains no secret elements.

4. The device according to claim 3, wherein the security module (T) contains a protecting password system (10).

5. The device according to claim 3 or claim 4, wherein the security module (T) has a configuration similar to that of a credit card.

6. The device according to any one of claims 3 to 5, wherein information stored in the security module (T) is stored at least partially in a cryptologically secured form.

7. The device according to any one of claims 3 to 6, wherein in the security module (T), a counter means (12) is provided for the production of an offset value and a modification stage (5) is provided for key modification on the basis of said offset value.

8. A security module for an encryption device for use in a network with open key management and with keys of different hierarchical levels, wherein said module is in the form of a portable independent unit capable of structural and electrical connection with an encryption device, which unit comprises the functional stages and memories required for the coding/decoding of information fed into it and for the storage of the coding/decoding keys used therefor, the coding/decoding keys additionally being protected against unauthorised reading.

9. The security module according to claim 8, wherein the security module additionally has a configuration according to any one of claims 4 to 7.

10. The use of the security module according to claim 8 or claim 9 for user identification.

11. The use of the security module according to claim 8 or claim 9 for the storage and output (distribution) of encryption keys to an encryption device and optionally to another security module.

## Revendications

1. Procédé de protection des éléments secrets dans un réseau d'appareils de chiffrage à gestion publique des clés et niveaux hiérarchiques différents des clés, dans lequel les clés (KD) de niveaux hiérarchiques inférieurs sont transmises, chiffrées au moyen de clés (KK) de niveaux hiérarchiques supérieurs, procédé caractérisé par le fait que le chiffrage des clés (KD) de niveaux hiérarchiques inférieurs se fait dans un module de sécurité (T) qui est séparable de l'appareil de chiffrage respectif (B) et sur lequel sont également mémorisées, en sécurité à l'égard d'une lecture non autorisée, les clés (KK) nécessaires de niveaux hiérarchiques plus élevés.

2. Procédé selon la revendication 1, caractérisé par le fait que la sécurité du chiffrage effectué dans le module de sécurité (T) avec les clés (KK) de niveaux hiérarchiques plus élevés, est assurée au moyen d'un système de mot de passe (10).

3. Dispositif de chiffrage pour emploi dans un réseau à gestion publique des clés et à niveaux hiérarchiques différents des clés, dans lequel les clés (KD) de niveaux hiérarchiques inférieurs sont transmises, chiffrées à l'aide des clés (KK) de niveaux hiérarchiques plus élevés, dispositif caractérisé par le fait qu'il présente un module de sécurité (T) qui peut se séparer, physiquement et électriquement, du reste de l'appareil (B), et dans lequel les étages de fonction (4, 5, 6) nécessaires pour le chiffrage des clés (KD) de niveaux hiérarchiques inférieurs ainsi que des clés (KK, modification) sont logés ou mémorisés, avec sécurité à l'égard d'une lecture non autorisée, de sorte que le reste de l'appareil (B) ne contient aucun élément secret.

4. Dispositif selon la revendication 3, caractérisé par le fait que le module de sécurité (T) présente un système de mot de passe (10) à rôle protecteur.

5. Dispositif selon la revendication 3 ou 4, caractérisé par le fait que le module de sécurité (T) a la forme d'une carte de crédit.

6. Dispositif selon l'une des revendications 3-5, caractérisé par le fait que les informations mémorisées dans le module de sécurité (T) sont au moins partiellement mémorisées sous forme chiffrée, présentant une sécurité.

7. Dispositif selon l'une des revendications 3-6, caractérisé par le fait que dans le module de sécurité (T) sont prévus un compteur (12) pour produire une valeur de modification, ainsi qu'un étage de modification (5) pour modifier la clé sur la base de cette valeur de modification.

8. Module de sécurité pour un dispositif de chiffrage à employer dans un réseau à gestion publique des clés et à niveaux hiérarchiques différents des clés, caractérisé par le fait qu'il est conçu sous forme d'une unité autonome, portable, qui peut être relié physiquement et électriquement avec un appareil de chiffrage et qui contient les étages de fonction ou les mémoires nécessaires pour le chiffrage/déchiffrage d'une information qui lui est amenée ainsi que ceux nécessaires pour la mémorisation des clés de chiffrage/déchiffrage qui y sont employées, étant précisé que les clés de chiffrage/déchiffrage sont en outre protégées à l'égard d'une lecture non autorisée.

9. Module de sécurité selon la revendication 8, caractérisé par le fait qu'il est en outre conçu selon l'une des revendications 4-7.

10. Emploi du module de sécurité selon la revendication 8 ou 9 pour l'identification de l'utilisateur.

11. Emploi du module de sécurité selon la revendication 8 ou 9, pour la mémorisation et la remise (distribution) de clés de chiffrage à un appareil de chiffrage et éventuellement à un autre module de sécurité.

Fig. 1
(Stand der Technik)

Fig. 2

Fig. 4

Fig. 3

Fig. 5

Fig. 6